Europäisches Patentamt

European Patent Office

Office européen des brevets

(11) Publication number: **0 368 446 B1**

# EUROPEAN PATENT SPECIFICATION

(45) Date of publication of patent specification: **10.11.93**    (51) Int. Cl.⁵: **G01P 21/00**, G01P 15/12

(21) Application number: **89308436.8**

(22) Date of filing: **21.08.89**

(54) **Self-calibrating accelerometer.**

(30) Priority: **23.09.88 US 248362**

(43) Date of publication of application:
**16.05.90 Bulletin 90/20**

(45) Publication of the grant of the patent:
**10.11.93 Bulletin 93/45**

(84) Designated Contracting States:
**DE ES FR GB IT**

(56) References cited:
**EP-A- 0 261 555**
**FR-A- 2 421 385**
**GB-A- 2 144 225**
**US-A- 3 120 622**

(73) Proprietor: **AUTOMOTIVE SYSTEMS LABORA-
TORY INC.**
**27200 Haggerty Road**
**Suite B-12**
**Farmington Hills Michigan 48331(US)**

(72) Inventor: **White, Craig W.**
**735 Lincoln**
**Grosse Pointe Michigan 48230(US)**
Inventor: **Behr, Leonard W.**
**361 Shotwell Court**
**Pontiac Michigan 48054(US)**
Inventor: **Musser, Kevin E.**
**22709 Lilac**
**Farmington Michigan 48024(US)**

(74) Representative: **Williams, Trevor John et al**
**J.A. KEMP & CO.**
**14 South Square**
**Gray's Inn**
**London WC1R 5EU (GB)**

EP 0 368 446 B1

## Description

The instant invention relates to apparatus for sensing variations in the speed of an object, such as a motor vehicle, and microprocessor-controlled circuitry therefor to provide a calibrated output signal notwithstanding manufacturing tolerances and changes in sensor response due to changes in the operating environment thereof.

EP-A-0261555, which forms the precharacterising portion of the annexed claim 1, discloses a semiconductor accelerometer in which a mass is supported by a cantilever, itself comprising strain gauges.

FR-A-2421385 discloses an accelerometer in which a cantilevered mass may move, as a result of acceleration between two capacitive plates, the plates giving an electrostatic measurement of the movement.

US 3120622 discloses an accelerometer, a piezoelectric element for measurement of acceleration and a piezoelectric or electromagnetic calibrating element.

The prior art teaches sensors having a sensing mass cantilevered on a support beam which is displaced generally normal to the direction of beam extension by an accelerating force. A plurality of strain gages bonded to the beam or diffused into the surface thereof are connected to a Wheatstone bridge in a manner familiar to those skilled in the art, whereby an output proportional to the amount of such sensing mass displacement is obtained. Unfortunately, the output from the strain gages is adversely affected by creep and hysteresis losses. Moreover, the resistance of the strain gages and, hence, the output of the Wheatstone bridge connected thereto vary greatly with temperature. The variation in bridge output due to temperature is further complicated, for example, where the sensing mass and its supporting beam are micromachined from silicon, as the relationship between the deflection of the sensing mass and temperature is unknown. Still further, such sensors are typically manufactured at high temperatures and subsequently cooled, whereby a thermal prestress is generated therein which is released or otherwise manifests itself as the operating temperature of the sensor varies. As a result, the sensor must be recalibrated on a continuing basis. Additionally, variations in the manufacturing process require additional manufacturing steps such as sensor resistance trimming which increase unit cost and reduce production volume.

It is an object of the instant invention to provide an acceleration sensor and an electrical control circuit therefor which provides an output which remains unaffected by temperature changes in the operating environment thereof.

A further object of the instant invention is to provide control circuitry for an acceleration sensor which automatically Compensates for variations in sensor output due to variation in the manufacturing process therefor, thereby obviating extreme tolerance control in the sensor manufacturing process and eliminating the need for subsequent tailoring of the sensor control circuit to the specific characteristics of an individual sensor which was heretofore necessary in obtaining a proper mating of the sensor with the control circuit.

According to the present invention, there is provided an accelerometer comprising a rigid frame, a resilient beam extending from the frame, a sensing mass supported relative to the frame by the beam, the sensing mass being responsive to acceleration of the frame so as to be displaced thereby from an initial position relative to the frame towards a second position of maximum sensing mass displacement relative to the frame, whereby the beam is deflected a resistor on the beam, the resistance of the beam resistor varying in response to deflection of the beam, and an electrical circuit responsive to the resistance of the beam resistor, for generating an output signal characterised by means for electrostatically displacing the sensing mass to a third position intermediate the first and second positions without regard to acceleration, the output signal of the electrical circuit being calibratable by displacement of the sensing mass to the third position by the electrostatic displacement means.

Preferably the center of mass of the sensing mass is displaced in a direction substantially normal to the plane of the beams from the initial position relative to the frame towards the second position relative thereto. Each of the supporting beams may have a plurality of resistors integral therewith whose resistance varies in response to deflection of the beams and, hence, in response to the displacement of the sensing mass. Where desired, the beams may provide diametrical support for the sensing mass thereof.

Preferably, the means for electrostatically displacing the sensing mass from its initial position to a third position short of the second position thereof comprises layers of a non-magnetic electrically conductive material on opposed surfaces of the sensing mass and frame, respectively. Upon the delivery of unlike charges to the layers, respectively, the sensing mass is displaced to the third position by the resulting electrostatic field in a manner analogous to being displaced by a known accelerating field.

Preferably the electrical circuit for generating a calibrated output signal from the instant sensor comprises a Wheatstone bridge having a pair of input and output terminals defining the four legs thereof, and a voltage source impressing a potential across the input terminals of the bridge. At least one of the legs of the bridge comprises a plurality of beam resistors. Additionally, at least one of the legs of the bridge further comprises a variable-resistance resistor, the resistance of which is adjusted by suitable control means therefor, such as a microprocessor, whereby the range of voltages developed across the output terminals of the bridge is adjusted to compensate for changes in sensor operating temperature and to accommodate manufacturing tolerances.

The electrical circuit may further comprise means for determining the voltage developed across the output terminals of the bridge, such as an analog-to-digital converter port on the microprocessor connected to the bridge output terminals by a differential amplifier; means for actuating the electrostatic displacement means of the instant sensor, such as a switch operable by the microprocessor for delivering the supply voltage across the layers; and means for generating a calibrated output signal derived from the instantaneous bridge output and adjusted to reflect changes in sensor response due to changes in the operating temperature thereof, as by comparing the instantaneous change in bridge output due to frame acceleration with the instantaneous change in bridge output due to electrostatic displacement of the sensing mass relative to the frame.

In the drawings, wherein like reference numerals are employed to designate like components among the various embodiments of the instant invention:

FIG. 1 is a cross-sectional view of a first exemplary embodiment of the acceleration sensor of the instant invention;

FIG. 2 is a bottom view of the first embodiment of the instant acceleration sensor with the base thereof removed;

FIG. 3 is a diagrammatic schematic of an electrical circuit for generating a calibrated output signal from the instant acceleration sensor;

FIG. 4 is a diagrammatic schematic of the microprocessor-controlled switch for depositing unlike charges on the opposed aluminum layers of the instant sensor, whereby the sensing mass of the sensor is electrostatically displaced relative to the frame thereof;

FIG. 5 is a view in cross-section of a second exemplary embodiment of the instant acceleration sensor; and

FIG. 6 is a bottom view of the second embodiment of the instant acceleration sensor with the base thereof removed.

## DETAILED DESCRIPTION OF THE PREFERRED EMBODIMENT OF THE INVENTION

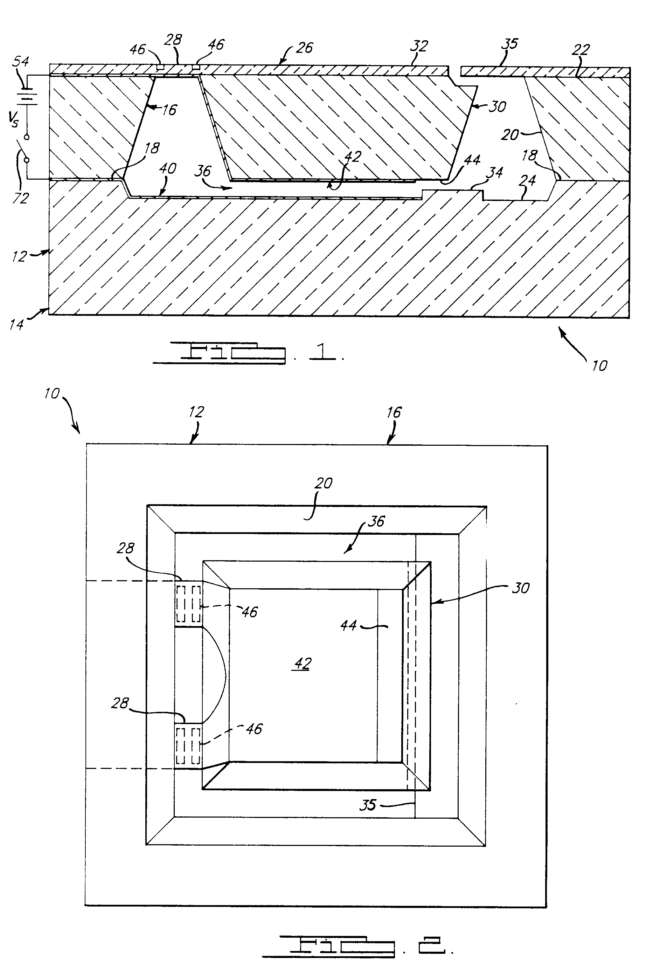

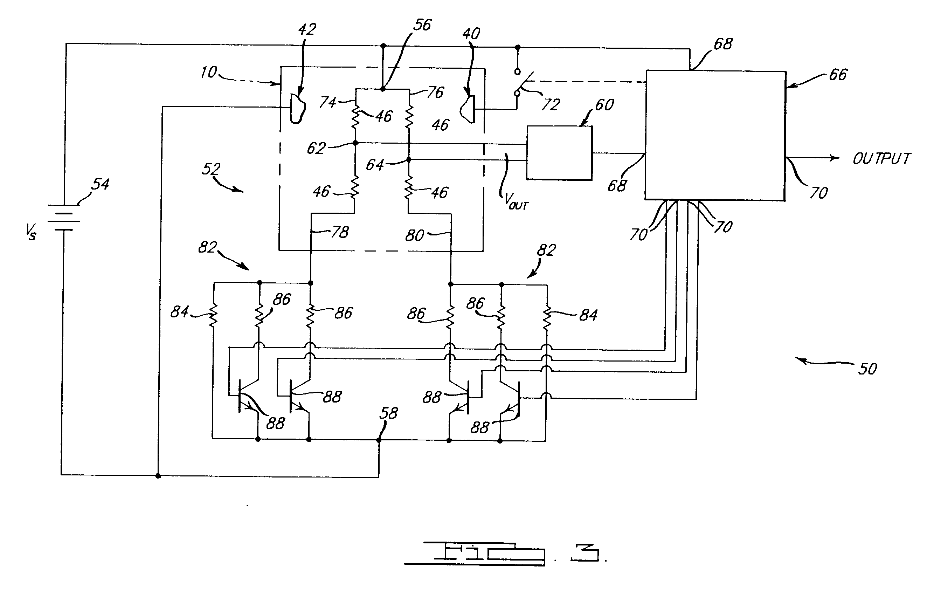

Referring to FIGS. 1 and 2, a first exemplary embodiment 10 of the acceleration sensor of the instant invention comprises a frame 12 having a lower section, or base 14, formed of an insulating material such as pyrex and an upper section 16 formed of insulating material such as silicon secured to the upper surface 18 of the base 14 as by bonding therewith. A aperture 20 extends through the upper section 16 of the frame 12 from the upper surface 22 thereof so as to expose the upper surface 24 of the base 14. A thin, planar section 26 of a semiconductor material such as silicon is bonded to the upper surface 22 of the upper frame 16 so as to provide a pair of beams 28 which extend across the aperture 20 therein generally parallel to the upper surface 24 of the base 14. A sensing mass 30, also micromachined from an insulating material such as silicon, is secured to the free ends 32 of the beams 28 as by bonding, whereby the sensing mass 30 is supported in a cantilevered fashion relative to the frame 12 by the beams 28. Alternatively, the planar section 26 and the sensing mass 30 are micromachined from a single block of semiconductor material such as silicon.

The sensing mass 30 is thus free to be displaced from an initial position relative to the upper frame 16 towards a second position relative thereto in a direction substantially normal to the plane of the beams 28 in response to acceleration of the frame 12 in a direction opposite thereto. A plurality of protrusions or stops 34 and 35 project from the base 14 and upper frame 16, respectively, for limiting the amount of the displacement of the sensing mass 30 relative to the frame 12. The basal stop 34 thus defines the second position relative to the frame 12 to which the sensing mass 30 may be displaced by any given acceleration of the frame 12. The gap 36 between the sensing mass 30 and the frame 12 is suitably configured to provide the desired level of gas damping for the sensing mass 30.

The instant sensor 10 further comprises a layer 40 of a non-magnetic electrically conductive material such as aluminum deposited as by a CVD process on the exposed upper surface 24 of the base 14. The conductive layer 40 on the base 14 thus extends generally parallel to the plane of the supporting beams 28 when the sensing mass 30 is in its initial position relative to the frame 12. A layer 42 of non-magnetic electrically conductive material such as aluminum is also deposited as by a CVD process on the underside 44 of the sensing mass 30 so as to be placed in opposition with the conductive layer 40 on the base 14. The layers 40 and 42 permit the electrostatic displacement of the sensing mass 30 relative to the frame 12 in the absence of an accelerating field upon the delivery of unlike electrical charges to the layers 40 and 42, respectively, as described hereinbelow.

A pair of resistors 46 are formed integral with each beam 28, respectively, as by doping selected portions of the upper surface 48 of each beam 28. For example, the beams may be doped with boron or arsenic ions using a CVD process or ion implant techniques. The resistance of the beam resistors 46 varies in response to beam deflection caused by displacement of the sensing mass 30 relative to the frame 12.

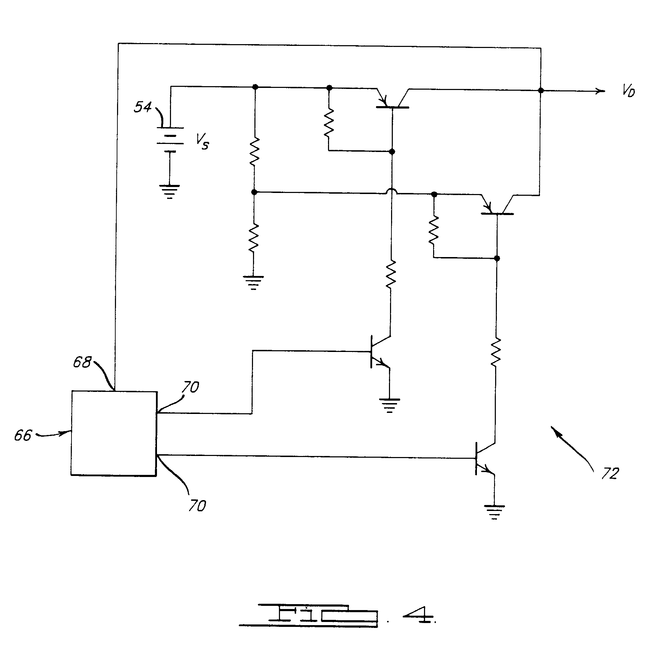

The electrical circuit 50 for generating a calibrated output signal OUTPUT derived from the instantaneous resistance of the beam resistors 46 of the instant sensor 10 and adjusted for temperature effects thereon is shown schematically in FIG. 3. The electrical circuit 50 comprises a Wheatstone bridge 52; a voltage supply, such as a battery 54, which impresses a potential $V_S$ across the input terminals 56 and 58 of the bridge 52; a differential amplifier 60 connected to the output terminals 62 and 64 of the bridge 52 for amplifying the voltage $V_{OUT}$ developed thereacross; and a microprocessor 66 having a pair of analog-to-digital converter ports 68 thereon for reading the output of the differential amplifier 60 and the instantaneous amplitude of the supply voltage $V_S$, and a plurality of output ports 70 thereon for controlling the range of voltages developed across the output terminals 62 and 64 of the bridge 52.

More specifically, the beam resistors 46 integral with the beams 28 of the sensor 10 are connected between the four terminals 56, 58, 62, and 64 of the Wheatstone bridge 52 to comprise the four legs 74, 76, 78, and 80 thereof. The position of each beam resistor 28 about the bridge 52 is determined in a manner known to those skilled in the art so as to maximize the change in the bridge output voltage $V_{OUT}$ upon displacement of the sensing mass 30 relative to the frame 12.

In addition, a resistor 82 of variable resistance is placed in series with each beam resistor 28 in the two lower legs 78 and 80 of the bridge 52. In the preferred embodiment of the instant invention, the variable resistors 82 comprise resistors 84 of fixed resistance placed in series with the beam resistors 46 of legs 78 and 80, respectively, and a plurality of additional resistors 86 of fixed resistance which are switched under microprocessor control into parallel relation therewith, respectively. The switches operable by the microprocessor 66 for switching each additional resistor 86 in parallel with one of the series resistors 84 comprise a transistor 88, the emitter of which is connected to terminal 58 of the bridge 52 and the collector of which is connected to the additional resistor 86. The microprocessor 66 connects an additional resistor 86 into parallel relation with one of the series resistors 84 by delivering current from an output port 70 thereon to the base of the transistor 88 connected therewith.

The microprocessor 66 is thus able to effect step changes in the resistance of legs 78 and 80 of the bridge 52 so as control the range of voltages developed across the output terminals 62 and 64 thereof during operation of the sensor 10. In this manner, the electrical control circuit 50 compensates for changes in bridge output $V_{OUT}$ due to variations in sensor operating temperature, in addition to accommodating manufacturing tolerances in the nominal resistances of the beam resistors 46.

Moreover, the electrical control circuit 50 is able to limit the output $V_{OUT}$ of the bridge 52 to a range of voltages which will avoid saturation of the differential amplifier 60, even where the sensing mass 30 is maximally displaced by acceleration of the frame to the second position relative thereto, i.e., into engagement with the basal stop 34. For example, when the microprocessor 66 determines that the bridge output $V_{OUT}$ falls outside of the allowable range of values necessary to avoid saturation of the differential amplifier 60, the microprocessor 66 begins to sequentially connect the additional resistors 8 into parallel relation with series resistors 84 of legs 78 and 80, respectively, until the average bridge output $V_{OUT}$ once again falls within the allowable range. It is noted that, while FIG. 3 shows only two switchable additional resistors 86 on each leg 78 and 80, the number of additional resistors 86 employed, and the resistance values thereof, are selected so as to provide optimum flexibility and performance.

It is noted that a purpose for tightly controlling of the output voltage $V_{OUT}$ of the bridge 52 is to permit the control circuit 50 to accurately determine when the acceleration input to the frame 12 exceeds a threshold value, whereupon the output OUTPUT from the control circuit 50 triggers an instrumentality, such as an air bag in a vehicle passenger restraint system (not shown). Thus, where a range of bridge output values is of particular significance, such as a bridge output $V_{OUT}$ approaching the threshold value, a second differential amplifier (not shown) having a different gain as the first differential amplifier 60 may be connected across the output terminals 62 and 64 of the bridge 52 to provide increased resolution with respect to that output range. In this regard, it is further noted that fewer switchable additional resistors 86 are thus required on each leg 78 and 80, as the redundancy provided by the two differential amplifiers provides the desired resolution, notwithstanding the early saturation of one of the differential amplifiers due to the higher gain thereof.

A running average value of the microprocessor-adjusted and amplified bridge output (hereinafter referred to as $V_{OUT}$ for the sake of clarity) is thereafter used as the base-line for comparison with the instantaneous output $V_{OUT,i}$ of the bridge 52. Where the instant sensor 10 is utilized in a vehicle passenger restraint system as an acceleration sensor therefor, the instantaneous changes in bridge output $V_{OUT}$ correspond to the displacement of the sensing mass 30 due to vehicle acceleration. A possible vehicle crash condition is indicated when the instantaneous bridge output $V_{OUT,i}$ exceeds the average bridge output $V_{OUT}$ by a threshold value, whereupon the microprocessor 66 assumes a crash condition and an average bridge output $V_{OUT}$ is no longer calculated. The average bridge output $V_{OUT}$ immediately prior to the indication of a possible crash condition is thereafter used as the base-line for comparison with the instantaneous output $V_{OUT,i}$ in order to further evaluate the vehicle acceleration profile. If the instantaneous output $V_{OUT,i}$ ceases to exceed the threshold value, a counter in the microprocessor is decremented. If the output does not exceed the threshold value for many consecutive readings, the microprocessor clears the crash condition by zeroing all accumulation counters therein, and normal averaging of the bridge output $V_{OUT}$ resumes.

The microprocessor 66 is also provided with a plurality of output ports 70 thereon for controlling the delivery of the unlike electrical charges to the conductive layers 40 and 42 of the sensor 10, respectively, and for providing the calibrated output signal OUTPUT.

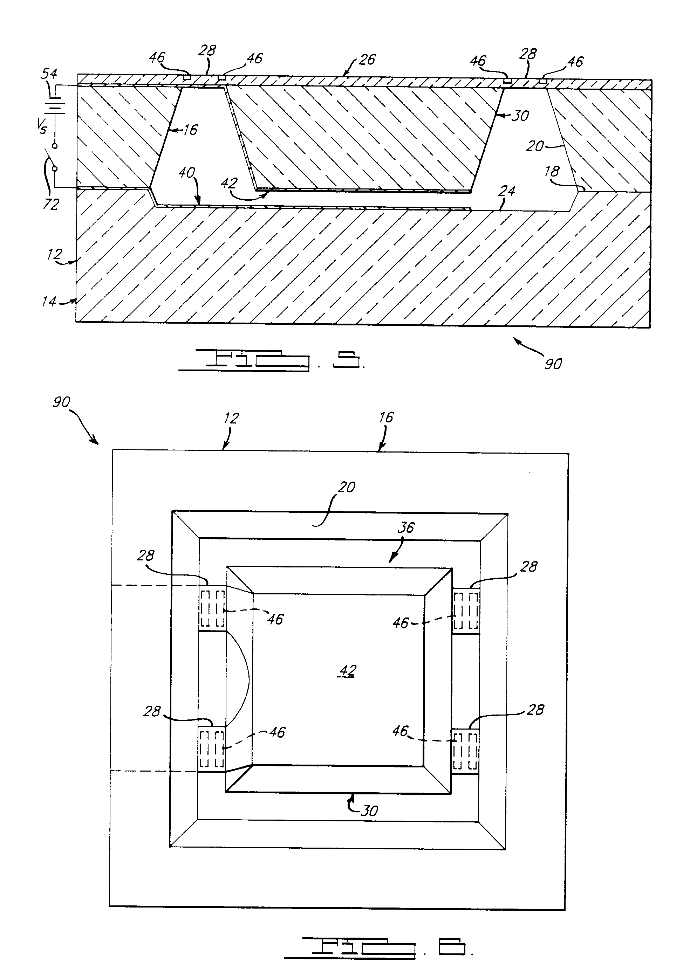

The microprocessor 66 controls the delivery of unlike charges to the conductive layers 40 and 42 of the sensor 10 as by operating a switch 72 connecting the base layer 40 with the supply voltage $V_S$ (with the layer 42 on the sensing mass 30 already being permanently connected to ground). A schematic of an exemplary switch 72 connecting the base layer 40 with the supply voltage $V_S$ and operable by a pair of output ports 68 on the microprocessor 66 to apply two different potentials thereto is illustrated in FIG. 4.

With respect to the generation of a calibrated output signal OUTPUT from the sensor 10, the electrical control circuit 50 of the instant invention utilizes the controlled electrostatic displacement of the sensing mass 30 relative to the sensor frame 12 to periodically recalibrate the output signal OUTPUT to accurately reflect the true acceleration profile of the vehicle. More specifically, during initial calibration of the sensor 10 and the associated control circuitry 50 therefor, the instantaneous change in bridge output $V_{OUT}$ resulting from a known accelerating field, as by temporarily orienting the sensor 10 so that the beams 28 thereof extend substantially perpendicular to the earth's gravitational field, is compared with the instantaneous change in bridge output $V_{OUT}$ upon electrostatic displacement of the sensing mass 30 by a known calibrating displacement voltage $V_{D,c}$, at a constant calibrating temperature $T_c$. The electrostatic field displacing the sensing mass 30 is thus effectively calibrated in terms of the known accelerating field, i.e., a unitary gravitational field. The instantaneous output $V_{OUT,i}$ of the bridge 52 may thereafter be periodically calibrated at any temperature $T_i$ by applying a like electrostatic deflection voltage $V_{D,c}$ across the conductive layers 40 and 42 of the sensor 10 and comparing the resultant change in bridge output $V_{OUT}$ with the earlier values therefor, as the sensing mass 30 is effectively being displaced by a known accelerating field.

Still further, the instantaneous change in bridge output voltage $V_{OUT,i}$ due to the electrostatic displacement of the sensing mass 30 relative to the frame 12 appears to be a function of the electrostatic displacement voltage $V_D$ and otherwise constant sensor parameters. Accordingly, it is believed that the instantaneous electrostatic displacement voltage $V_{D,i}$ need not be equal to the original electrostatic displacement voltage $V_{D,c}$ for calibration of the instantaneous output $V_{OUT,i}$ of the bridge 52. Thus, the instant invention additionally avoids the costs encountered in otherwise having to tightly control the electrostatic displacement voltage $V_D$. Accordingly, the instant invention employs simple switching means, such as the transistor/resistor circuit shown in FIG. 4, to provide a displacement voltage $V_D$ equal to either the supply voltage $V_S$ or a percentage thereof. Specifically, a displacement voltage $V_D$ equal to the supply voltage $V_S$ is used to fully deflect the sensing mass 30 to the second position against the basal stop 34 to test for the presence of foreign objects, such as dust particles (not shown), in the gap 36 between the sensing mass 30 and the upper surface 24 of the base 14. A displacement voltage $V_D$ equal to a percentage of the supply voltage $V_S$ is used to partially displace the sensing mass 30 from its initial position relative to the frame 12 towards the second position relative thereto for calibration of the output signal OUTPUT. Where the instantaneous electrostatic displacement voltage $V_{D,i}$ differs from the original calibrating displacement voltage $V_{D,c}$, the microprocessor 66 reads the instantaneous electrostatic displacement voltage $V_{D,i}$ for use in calculating the equivalent accelerating field experienced by the sensing mass 30 during such electrostatic displacement thereof.

The calibration of the instant sensor 10 and the generation of the calibrated output signal OUTPUT may be illustrated as follows: during sensor production, a circuit board (not shown) comprising the sensor 10 and the electrical control circuit 50 therefor is laid flat on a number of vertically extending probes in what is generally referred to as a "bed of nails" test, whereby various voltages about the circuit are measured to ensure circuit integrity. The sensing mass 30 is thus oriented so as to be subjected to the gravitational field of 1G and is displaced thereby from its initial position relative to the sensor frame 12 towards a second position relative thereto. When power is first delivered to the circuit board, the microprocessor 66 reads various locations in a non-volatile memory unit, such as an EEPROM (not shown), connected therewith. If these values are zero, the sensor has not yet been calibrated, and the microprocessor 66 reads the first calibrating output $V_{OUT,c1}$ of the bridge 52 corresponding to the 1G acceleration field at the calibrating temperature $T_c$, whereafter the microprocessor 66 stores the value of $V_{OUT,c1}$ in the EEPROM.

The circuit board is thereafter assembled into a housing (not shown) and potted therein, whereupon the circuit board is again tested at temperature $T_c$ to ensure sensor and circuit integrity. The housing is oriented in the position it will occupy when mounted in a vehicle, with the plane of the beams 28 supporting the sensing mass 30 thus extending substantially parallel with the gravitational field, whereby the sensing mass 30 returns to its initial position relative to the sensor frame 12. The microprocessor 66 checks the EEPROM for the presence of the first calibration value $V_{OUT,c1}$ stored therein and further determines that all calibration constants have not yet been calculated. The microprocessor 66 then reads the second calibrating output $V_{OUT,c2}$ of the bridge 52 in the absence of an accelerating field and at the calibration temperature $T_c$. The difference between $V_{OUT,c1}$ and $V_{OUT,c2}$ is the calibrated "sensitivity" $S_c$ of the sensor 10, i.e., the change in bridge output $V_{OUT}$ due to an acceleration of 1G, at temperature $T_c$.

With the sensor 10 still at the calibration temperature $T_c$, the microprocessor 66 then actuates the switch 72 to apply a first calibrating displacement voltage $V_{D,c}$ to the conductive layers 40 and 42 of the sensor 10, whereby the sensing mass 30 is displaced electrostatically. The microprocessor 66 reads and stores the amplitude of the first calibrating displacement voltage $V_{D,c}$ and determines the change in bridge output $V_{OUT}$ by reading the resultant bridge output $V_{OUT,D,c}$ and subtracting there from the average output $V_{OUT}$ of the bridge 52, whereafter the resultant value is stored in the EEPROM.

The accelerating field equivalent of the first calibrating electrostatic field is then calculated for use in interpreting instantaneous changes in bridge output $V_{OUT}$. Specifically, the equivalent field $F_c$ (in Gs) is calculated by the microprocessor 66 using the following formula:

$$F_c = \frac{V_{OUT,D,c} - V_{OUT}}{S_c}$$

Where the instantaneous calibrating electrostatic deflection voltage $V_{D,i}$ equals the first calibrating electrostatic deflection voltage $V_{D,c}$, the instantaneous sensitivity $S_i$ of the sensor 10, i.e., the instantaneous change in the bridge output voltage $V_{OUT}$ which corresponds to an acceleration of 1G, can be calculated as follows:

$$S_i = \frac{V_{OUT,D,i} - V_{OUT}}{F_c}$$

Where the instantaneous calibrating electrostatic displacement voltage $V_{D,i}$ is not equal to the first calibrating electrostatic displacement voltage $V_{D,c}$, the instantaneous sensitivity $S_i$ nonetheless remains a function of the electrostatically-induced instantaneous change in bridge output $V_{OUT,D,i}$ and the sensor calibration constants, with the precise relationship therebetween being established by suitable means.

It is noted that the first calibrating electrostatic voltage $V_{D,c}$ and the instantaneous calibrating electrostatic voltage $V_{D,i}$ (where the latter differs from the former) are preferably chosen so as not to fully displace the sensing mass 30 towards the second position relative to the frame 12, i.e., into contact with the stop 34 protruding from the upper surface 24 of the base 14. Additionally, it is noted that, under the instant invention, the conductive layer 40 on the base 14 and the opposed conductive layer 42 on the sensing mass 30 may be normally biased to a like potential, e.g., to a nominal voltage of +5 volts. The sensing mass 30 is thereafter electrostatically displaced by increasing or decreasing the potential of either of the layers 40 or 42.

FIGS. 5 and 6 show a second embodiment 90 of the acceleration sensor of the instant invention. In the second embodiment 90, the beams 28 provide diametrical support for the sensing mass 30 thereof. Each of the beams 28 is provided with at least one resistor 46 integral therewith. It is noted that, while FIG. 6 shows a total of four beams 28 supporting the sensing mass 30, the instant invention contemplates the use of but two beams 28 to diametrically support the sensing mass 30. Similarly, the instant invention further contemplates the use of a semiconductor "membrane" to support the sensing mass 30, selected portions of which are doped to provide a plurality of resistors 46 thereon. It is noted that the beam resistors 46 of the second embodiment are connected between the terminals 56, 58, 62, and 64 of the Wheatstone bridge 52 in the manner known to those skilled in the art so as to maximize the change in output therefrom upon displacement of the sensing mass 30 relative to the frame 12.

While the preferred embodiments of the invention have been disclosed, it should be appreciated that the invention is susceptible of modification without departing from the scope of the subjoined claims.

## Claims

1. An accelerometer comprising:

   a rigid frame (12);

   a resilient beam (26) extending from said frame (12);

   a sensing mass (30) supported relative to said frame (12) by said beam (28), said sensing mass (30) being responsive to acceleration of said frame (12) so as to be displaced thereby from an initial position relative to said frame (12) towards a second position of maximum sensing mass displacement relative to said frame (12), whereby said beam (28) is deflected;

   a resistor (46) on said beam (28), the resistance of said beam resistor (46) varying in response to deflection of said beam (28); and

   an electrical circuit (Figure 3) responsive to the resistance of said beam resistor (46) for generating an output signal; characterised by

   means (40,42) for electrostatically displacing said sensing mass (30) to a third position intermediate said first and second positions without regard to acceleration;

   said output signal of said electrical circuit being calibratable by displacement of said sensing mass (30) to said third position by said electrostatic displacement means (40, 42).

2. The acceleration sensor of claim 1, wherein said beam (28) is formed of a semiconductor material, and said beam resistor (46) comprises a doped portion of said semiconductor material.

3. The acceleration sensor of claim 1 or 2 wherein said electrostatic displacement means comprises;

   a first layer of non-magnetic electrically conductive material (40) on said frame;

   a second layer of non-magnetic electrically conductive material (42) on said sensing mass (30) in opposition with said first layer (40) on said frame (12); and

   means for depositing unlike electrical charges on said first (40) and second (42) layers, respectively.

4. The acceleration sensor of claim 3 wherein said means for depositing unlike electrical charges (72) on said first (40) and second (42) layers, respectively, comprises a voltage source ($V_s$) switchably connected across said layers.

5. The acceleration sensor of any preceding claim including stop means (34) for limiting the amount of displacement of said sensing mass (30) relative to said frame (12).

6. The acceleration sensor of claim 5 wherein said stop means (34) comprises a plurality of protrusions from said frame engageable with said sensing mass (30).

7. The acceleration sensor of any preceding claim including a second resilient beam (28) extending from said frame (12) to support said sensing mass (30), said beams (28) providing diametrical support for said sensing mass (30).

8. The acceleration sensor of any preceding claim including gas damping means for damping displacement of said sensing mass (30).

9. The acceleration sensor of any preceding claim wherein said electrical circuit comprises:

   a Wheatstone bridge (52) having a pair of input terminals (56,58) and a pair of output terminals (62,64) defining the four legs thereof, at least one of said legs comprising a beam resistor (46);

   means (54) for impressing a potential across the input terminals (56,58) of said bridge; and

   means (66) for determining the voltage developed across the output terminals (62,64) of said bridge.

10. The acceleration sensor of claim 9 wherein said means for determining the voltage developed across the output terminals of said bridge comprises a microprocessor (66) having means thereon connected to each of the output terminals, respectively, for reading the voltage developed thereacross.

11. The acceleration sensor of claim 10 wherein said means on said microprocessor (66) for reading the voltage developed across the output terminals of said bridge comprises an analog-to-digital converter port (68) on said microprocessor (66) connected to the output terminals by a differential amplifier (60).

12. The acceleration sensor of claim 10 or 11 wherein at least one of said legs of said bridge further comprises a first resistor of variable resistance (82), the resistance of said first resistor (82) being controlled by said microprocessor (66).

13. The acceleration sensor of claim 12 wherein said first resistor (82) is placed in series with a beam resistor (46) between the terminals defining said leg of said bridge.

14. The acceleration sensor of claim 12 wherein said first resistor (82) of variable resistance comprises a second resistor (84) of fixed resistance and at least one addition resistor (86) of fixed resistance, the or each said additional resistor (86) being switchable in parallel with said second resistor (84) by a like number of switch means operable by said microprocessor (66).

15. The acceleration sensor of claim 14 wherein each of said switch means operable by said microprocessor (66) for switching one of said additional resistors (86) in parallel with said second resistor (84) comprises a transistor (88), the emitter of said transistor being connected to a terminal of said bridge; the collector of said transistor (88) being connected to said additional resistor (86), and the base of said transistor being connected to said microprocessor (66), whereby said additional resistor (86) is switchably connected in parallel with said second resistor (84) upon the delivery of current to the base of said transistor (88) by said microprocessor (66).

16. The acceleration sensor of any one of claims 9 to 15 wherein said electrical circuit further comprises:
    means for actuating said electrostatic displacement means (40,42);
    means for determining the resultant change in the voltage developed across the output terminals (62,64) of said bridge (52); and
    means for generating a calibrated output signal derived from the instantaneous voltage developed across the output terminals (62,64) of said bridge (52).

17. The acceleration sensor of any one of claims 10 to 15 wherein said means for generating said calibrated output signal comprises means for comparing the change in the voltage developed across the output terminals (62,64) of said bridge (52) due to acceleration of said sensing mass (30) relative to said frame (12) with the change in the voltage developed across the output terminals (62,64) of said bridge (52) due to the electrostatic displacement of said sensing mass (30) relative to said frame (12).

18. The acceleration sensor of claim 16 wherein said means for generating said calibrated output signal comprises
    means for determining the instantaneous sensitivity of said sensor (46) by comparing the instantaneous change in the voltage developed across the output terminals (62,64) of said bridge (52) due to acceleration of said sensing mass (30) relative to said frame (12) with the change in the voltage developed across the output terminals (62,64) of said bridge (52) due to the electrostatic displacement of said sensing mass (30) relative to said frame (12); and
    means for calibrating the instantaneous voltage developed across the output terminals (62,64) of said bridge (52) in terms of said instantaneous sensitivity.

19. The accelerometer of any preceding claim, wherein said the means for electrostatically displacing the sensing means providing an electrostatic field which is calibrated with reference to a unitary gravitational field.

20. The accelerometer of claim 17 including means responsive to the voltage developed across the output terminals (62,64) of said bridge (52) for varying the resistance of one of the legs of said bridge (52), whereby the voltage developed across the output terminals (62,64) of said bridge (52) is maintained in a desired range.

**Patentansprüche**

1. Beschleunigungsmesser umfassend:
    einen steifen Rahmen (12);
    einen von dem Rahmen (12) ausgehenden elastischen Träger (28);
    eine relativ zu dem Rahmen (12) durch den Träger (28) gehaltene Fühlermasse (30), die auf Beschleunigung des Rahmens (12) anspricht, um dadurch von einer Ausgangstellung relativ zu dem Rahmen (12) in Richtung einer zweiten Stellung maximaler Fühlermassenverlagerung relativ zu dem Rahmen (12) verlagert zu werden, wodurch der Träger (28) durchgebogen wird;

einen Widerstand (46) an dem Träger (28), wobei sich der Widerstandswert des Trägerwiderstands (46) als Reaktion auf die Durchbiegung des Trägers (28) ändert; und

und eine auf den Widerstandswert des Trägerwiderstands (46) ansprechende elektrische Schaltung (Fig. 3) zum Erzeugen eines Ausgangssignals; gekennzeichnet durch

eine Einrichtung (40,42) zum elektrostatischen Verlagern der Fühlermasse (30) zu einer dritten Stellung zwischen der ersten und der zweiten Stellung ohne Rücksicht auf Beschleunigung;

wobei das Ausgangssignal der elektrischen Schaltung eichbar ist durch Verlagerung der Fühlermasse (30) durch die elektrostatische Verlagerungseinrichtung (40,42) zu der dritten Stellung.

2. Beschleunigungssensor nach Anspruch 1, bei dem der Träger (28) aus einem Halbleitermaterial gebildet ist und der Trägerwiderstand (46) einen dotierten Abschnitt des Halbleitermaterials umfaßt.

3. Beschleunigungssensor nach Anspruch 1 oder 2, bei dem die elektrostatische Verlagerungseinrichtung umfaßt:

eine erste Schicht aus nicht-magnetischem elektrisch leitendem Material (40) auf dem Rahmen;

eine zweite Schicht aus nicht-magnetischem elektrisch leitendem Material (42) auf der Fühlermasse (30) in Gegenüberstellung mit der ersten Schicht (40) auf dem Rahmen (12); und

eine Einrichtung zum Ablegen ungleicher elektrischer Ladungen auf der ersten (40) bzw. zweiten (42) Schicht.

4. Beschleunigungssensor nach Anspruch 3, bei dem die Einrichtung zum Ablegen ungleicher elektrischer Ladungen (72) auf den ersten (40) bzw. zweiten Schichten (42) eine schaltbar über den Schichten angeschlossene Spannungsquelle Vs umfaßt.

5. Beschleunigungssensor nach einem der vorangehenden Ansprüche mit Anschlageinrichtung (34) zum Begrenzen des Betrags der Verlagerung der Fühlermasse (30) relativ zu dem Rahmen (12).

6. Beschleunigungssensor nach Anspruch 5, bei dem die Anschlageinrichtung (34) eine Mehrzahl Vorsprünge von dem Rahmen umfaßt, die mit der Fühlermasse (30) kuppelbar sind.

7. Beschleunigungssensor nach einem der vorangehenden Ansprüche mit einem zweiten elastischen Träger (28), der sich von dem Rahmen (12) erstreckt, um die Fühlermasse (30) zu halten, wobei die Träger (28) eine diametrale Halterung für die Fühlermasse (30) darstellen.

8. Beschleunigungssensor nach einem der vorangehenden Ansprüche mit Gasdämpfungseinrichtung zum Dämpfen der Verlagerung der Fühlermasse (30).

9. Beschleunigungssensor nach einem der vorangehenden Ansprüche, bei dem die elektrische Schaltung umfaßt:

eine Wheatstonebrücke (52) mit einem Paar Eingangsanschlüssen (56,58) und einem Paar Ausgangsanschlüssen (62,64), die deren vier Schenkel bilden, wobei wenigstens einer der Schenkel einen Trägerwiderstand (46) umfaßt;

eine Einrichtung (54) zum Einprägen eines Potentials über den Eingangsanschlüssen (56,58) der Brücke; und

eine Einrichtung (66) zum Bestimmen der über den Ausgangsanschlüssen (62,64) der Brücke entwickelten Spannung.

10. Beschleunigungssensor nach Anspruch 9, bei dem die Einrichtung zum Bestimmen der über den Ausgangsanschlüssen der Brücke entwikkelten Spannung einen Mikroprozessor (66) mit Einrichtungen daran umfaßt, die mit jedem der jeweiligen Ausgangsanschlüsse verbunden sind, um die darüber entwickelte Spannung abzulesen.

11. Beschleunigungssensor nach Anspruch 10, bei dem die Einrichtung an dem Mikroprozessor (66) zum Ablesen der über den Ausgangsanschlüssen der Brücke entwickelten Spannung einen Analog-Digital-Wandleranschluß (68) an dem Mikroprozessor (66) umfaßt, der mit den Ausgangsanschlüssen durch einen Differenzverstärker (60) verbunden ist.

12. Beschleunigungssensor nach Anspruch 10 oder 11, bei dem wenigstens einer der Schenkel der Brücke weiter einen ersten Widerstand (82) veränderbaren Widerstandswerts umfaßt, wobei der Widerstandswert des ersten Widerstands (82) durch den Mikroprozessor (66) gesteuert wird.

13. Beschleunigungssensor nach Anspruch 12, bei dem der erste Widerstand (82) in Reihe mit einem Trägerwiderstand (46) zwischen die Anschlüsse gelegt ist, die den Schenkel der Brücke bilden.

14. Beschleunigungssensor nach Anspruch 12, bei dem der erste Widerstand (82) veränderbaren Widerstandswerts einen zweiten Widerstand (84) festen Widerstandswerts und wenigstens einen zusätzlichen Widerstand (86) festen Widerstandswerts umfaßt, wobei der oder jeder der zusätzlichen Widerstände (86) mit dem zweiten Widerstand (84) durch eine gleiche Anzahl von dem Mikroprozessor (66) betreibbarer Schalteinrichtungen parallelschaltbar sind.

15. Beschleunigungssensor nach Anspruch 14, bei dem jede der von dem Mikroprozessor (66) betreibbaren Schalteinrichtungen zum Schalten eines der zusätzlichen Widerstände (86) parallel mit dem zweiten Widerstand (84) einen Transistor (88) umfaßt, wobei der Emitter des Transistors mit einem Anschluß der Brücke, der Kollektor des Transistors (88) mit dem zusätzlichen Widerstand (86) und die Basis des Transistors mit dem Mikroprozessor (66) verbunden ist, wodurch bei der Zuführung von Strom an die Basis des Transistors (88) durch den Mikroprozessor (66) der zusätzliche Widerstand (86) mit dem zweiten Widerstand (84) parallelschaltbar ist.

16. Beschleunigungssensor nach einem der Ansprüche 9 bis 15, bei dem die elektrische Schaltung weiter umfaßt:
    eine Einrichtung zum Betätigen der elektrostatischen Verlagerungseinrichtung (40,42);
    eine Einrichtung zum Bestimmen der resultierenden Änderung in der über den Ausgangsanschlüssen (62,64) der Brücke (52) entwickelten Spannung und
    eine Einrichtung zum Erzeugen eines von der über den Ausgangsanschlüssen (62,64) der Brücke (52) entwickelten momentanen Spannung abgeleiteten geeichten Ausgangssignals.

17. Beschleunigungssensor nach einem der Ansprüche 10 bis 15, bei dem die Einrichtung zum Erzeugen des geeichten Ausgangssignals eine Einrichtung umfaßt zum Vergleichen der Änderung in der über den Ausgangsanschlüssen (62,64) der Brücke (52) infolge Beschleunigung der Fühlermasse (30) relativ zu dem Rahmen (12) entwickelten Spannung mit der Änderung in der über den Ausgangsanschlüssen (62,64) der Brücke (52) infolge der elektrostatischen Verlagerung der Fühlermasse (30) relativ zu dem Rahmen (12) entwickelten Spannung.

18. Beschleunigungssensor nach Anspruch 16, bei dem die Einrichtung zum Erzeugen des geeichten Ausgangssignals umfaßt:
    eine Einrichtung zum Bestimmen der momentanen Empfindlichkeit des Sensors (10) durch Vergleichen der momentanen Änderung in der über den Ausgangsanschlüssen (62,64) der Brücke (52) infolge Beschleunigung der Fühlermasse (30) relativ zu dem Rahmen (12) entwickelten Spannung mit der Änderung in der über den Ausgangsanschlüssen (62,64) der Brücke (52) infolge der elektrostatischen Verlagerung der Fühlermasse (30) relativ zu dem Rahmen (12) entwickelten Spannung; und
    eine Einrichtung zum Eichen der über den Ausgangsanschlüssen (62, 64) der Brücke (52) entwickelten momentanen Spannung in Form der momentanen Empfindlichkeit.

19. Beschleunigungsmesser nach einem der vorangehenden Ansprüche, bei dem die Einrichtung zum elektrostatischen Verlagern der Fühlereinrichtung ein elektrostatisches Feld bereitstellt, das mit Bezug auf ein Einheitsschwerefeld geeicht ist.

20. Beschleunigungsmesser nach Anspruch 17 mit Einrichtung, die auf die über den Ausgangsanschlüssen (62,64) der Brücke (52) entwickelte Spannung anspricht, zum Verändern des Widerstandswerts von einem der Schenkel der Brücke (52), wodurch die über den Ausgangsanschlüssen (62,64) der Brücke (52) entwickelte Spannung in einem gewünschten Bereich gehalten wird.

**Revendications**

1. Accéléromètre comprenant :
    un cadre rigide (12) ;
    une poutre résiliente (26) se prolongeant à partir dudit cadre (12) ;
    une masse de détection (30) supportée par rapport audit cadre (12) par ladite poutre (28), cette masse de détection (30) étant sensible à l'accélération dudit cadre (12) de manière à être déplacée par celui-ci depuis une position initiale par rapport audit cadre (12) vers une seconde position de déplacement maximal de la masse de détection par rapport audit cadre (12), grâce à quoi ladite poutre (28) s'incurve ;
    une résistance (46) sur cette poutre (28) dont la valeur varie en réponse au fléchissement de ladite poutre (28) ; et

un circuit électrique (figure 3) sensible à la valeur de la résistance (46) sur la poutre pour engendrer un signal de sortie ; caractérisé par le fait qu'il comprend :

des moyens (40,42) pour déplacer électrostatiquement ladite masse de détection (30) vers une troisième position intermédiaire entre les première et seconde positions indépendamment de l'accélération ;

ledit signal de sortie du circuit électrique pouvant être calibré par déplacement de la masse de détection (30) vers la troisième position par lesdits moyens de déplacement électrostatiques (40,42).

2. Accéléromètre selon la revendication 1, dans lequel ladite poutre (28) est formée d'un matériau semi-conducteur, et ladite résistance (46) sur la poutre comprend une partie dopée de ce matériau semi-conducteur.

3. Accéléromètre selon la revendication 1 ou 2, dans lequel les moyens de déplacement électrostatiques comprennent :

une première couche d'un matériau électriquement conducteur non magnétique (40) sur ledit cadre ;

une seconde couche de matériau électriquement conducteur non magnétique (42) sur la masse de détection (30) en opposition avec la première couche (40) sur ledit cadre (12) ; et

un moyen pour déposer des charges électriques inégales sur les première (40) et seconde (42) couches, respectivement.

4. Accéléromètre selon la revendication 3, dans lequel le moyen de dépôt de charges électriques inégales (72) sur les première (40) et seconde (42) couches, respectivement, comprend une source de tension ($V_s$) reliée de façon commutable entre les couches.

5. Accéléromètre selon l'une quelconque des revendications précédentes, comprenant un moyen de butée (34) pour limiter la valeur du déplacement de la masse de détection (30) par rapport au cadre (12).

6. Accéléromètre selon la revendication 5, dans lequel le moyen de butée (34) comprend, sur ledit cadre, une multitude de saillies avec lesquelles la masse de détection (30) peut venir en contact.

7. Accéléromètre selon l'une quelconque des revendications précédentes, comprenant une seconde poutre résiliente (28) se prolongeant à partir du cadre (12) pour supporter la masse de détection (30), cette poutre (28) fournissant un support diamétral à ladite masse de détection (30).

8. Accéléromètre, selon l'une quelconque des revendications précédentes, comprenant un moyen d'amortissement à gaz pour amortir le déplacement de la masse de détection (30).

9. Accéléromètre selon l'une quelconque des revendications précédentes, dans lequel le circuit électrique comprend :

un pont de Wheatstone (52) ayant une paire de bornes d'entrée (56,58) et une paire de bornes de sortie (62,64) définissant les quatre branches de celui-ci, au moins une de ces branches comprenant une résistance sur la poutre (46) ;

un moyen (54) pour appliquer un potentiel entre les bornes d'entrée (56,58) du pont ; et

un moyen (66) pour déterminer la tension engendrée entre les bornes de sortie (62,64) du pont.

10. Accéléromètre selon la revendication 9, dans lequel le moyen de détermination de la tension engendrée entre les bornes de sortie du pont comprend un microprocesseur (66) ayant, sur lui, un moyen relié à chacune des bornes de sortie, respectivement, pour lire la tension engendrée entre celles-ci.

11. Accéléromètre selon la revendication 10, dans lequel le moyen, sur le microprocesseur (66), pour lire la tension développée entre les bornes de sortie du pont comprend un pôle (68) de convertisseur analogique/numérique sur le microprocesseur (66) relié aux bornes de sortie par un amplificateur différentiel (60).

12. Accéléromètre selon la revendication 10 ou 11, dans lequel au moins une des branches du pont comprend en outre une première résistance de valeur variable (82), la valeur de cette première résistance (82) étant réglée par le microprocesseur (66).

13. Accéléromètre selon la revendication 12, dans lequel la première résistance (82) est placée en série avec une résistance (46) sur la poutre entre les bornes définissant ladite branche du pont.

**14.** Accéléromètre selon la revendication 12, dans lequel la première résistance (82) de valeur variable comprend une seconde résistance (84) de valeur fixe et au moins une résistance supplémentaire (86) de valeur fixe, la ou chacune des résistances supplémentaires (86) étant commutable en parallèle avec la seconde résistance (84) par un nombre analogue de moyens de commutation actionnables par le microprocesseur (66).

**15.** Accéléromètre selon la revendication 14, dans lequel chacun des moyens de commutation actionnable par le microprocesseur (66) pour la commutation d'une des résistances supplémentaires (86) en parallèle avec la seconde résistance (84) comprend un transistor (88) dont l'émetteur est relié à une borne dudit pont, le collecteur à la résistance supplémentaire (86) et la base au microprocesseur (66), grâce à quoi la résistance supplémentaire (86) est reliée de façon commutable en parallèle avec la seconde résistance (84) lors de la fourniture de courant à la base dudit transistor (88) par le microprocesseur (66).

**16.** Accéléromètre selon l'une quelconque des revendications 9 à 15, dans lequel le circuit électrique comprend en outre :

un moyen pour actionner lesdits moyens de déplacement électrostatiques (40,42) ;

un moyen pour déterminer la modification résultante dans la tension engendrée entre les bornes de sortie (62,64) du pont (52) ; et

un moyen pour engendrer un signal de sortie calibré dérivé de la tension instantanée engendrée entre les bornes de sortie (62,64) du pont (52).

**17.** Accéléromètre selon l'une quelconque des revendications 10 à 15, dans lequel le moyen pour engendrer le signal de sortie calibré comprend un moyen pour comparer la modification de la tension engendrée entre les bornes de sortie (62,64) du pont (52) dûe à l'accélération de la masse de détection (30) par rapport au cadre (12) à la modification de la tension engendrée entre les bornes de sortie (62,64) du pont (52) dûe au déplacement électrostatique de la masse de détection (30) par rapport au cadre (12).

**18.** Accéléromètre selon la revendication 16, dans lequel le moyen pour engendrer le signal de sortie calibré comprend :

un moyen pour déterminer la sensibilité instantanée de l'accéléromètre en comparant la modification instantanée de la tension engendrée entre les bornes de sortie (62,64) du pont (52) dûe à l'accélération de la masse de détection (30) par rapport au cadre (12) à la modification de la tension engendrée entre les bornes de sortie (62,64) du pont (52) dûe au déplacement électrostatique de la masse de détection (30) par rapport au cadre (12) ; et

un moyen pour calibrer la tension instantanée développée entre les bornes de sortie (62,64) du pont (52) en termes de sensibilité instantanée.

**19.** Accéléromètre selon l'une quelconque des revendications précédentes, caractérisé en ce que le moyen pour déplacer électrostatiquement la masse de détection fournit un champs électrostatique qui est calibré en référence à un champs gravitationnel unitaire.

**20.** Accéléromètre selon la revendication 17, incluant un moyen sensible à la tension engendrée entre les bornes de sortie (62,64) du pont (52) pour faire varier la valeur de la résistance d'une des branches du pont (52), grâce à quoi la tension engendrée entre les bornes de sortie (62,64) du pont (52) est maintenue dans un domaine voulu.

FIG. 1.

FIG. 2.

FIG. 3.

EP 0 368 446 B1

FIG. 4.

FIG. 5.

FIG. 6.

16